(19)

Europäisches Patentamt
European Patent Office
Office européen des brevets

(11) **EP 4 703 222 A1**

(12) **EUROPEAN PATENT APPLICATION**

(43) Date of publication:
04.03.2026 Bulletin 2026/10

(21) Application number: 25184378.5

(22) Date of filing: **23.06.2025**

(51) International Patent Classification (IPC):
**B60W 10/08** (2006.01) **B60T 7/00** (2006.01)
**B60W 10/184** (2012.01) **B60W 10/20** (2006.01)
**B60W 50/14** (2020.01) **B62D 7/14** (2006.01)
**B60R 1/27** (2022.01)

(52) Cooperative Patent Classification (CPC):
**B60W 10/08; B60R 1/27; B60T 7/12; B60T 8/17; B60W 10/184; B60W 10/20; B60W 50/14; B62D 7/1509;** B60K 2360/176; B60T 2260/022; B60W 30/045; B60W 2050/146; B60W 2420/403; B60W 2520/06; B60W 2540/10; (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **02.09.2024 KR 20240118643**

(71) Applicant: **Hyundai Mobis Co., Ltd.**
**Gangnam-gu**
**Seoul 06141 (KR)**

(72) Inventors:
• **LEE, Jong Min**
**16891 Yongin-si, Gyeonggi-do (KR)**
• **CHOI, Moon Cheon**
**16891 Yongin-si, Gyeonggi-do (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **APPARATUS AND METHOD FOR CONTROLLING E-CORNER VEHICLE**

(57) Disclosed herein may be an apparatus and method for controlling an e-Corner vehicle. The apparatus may include: an input module configured to receive a driving mode; a camera module configured to capture images in front, rear, left, and right directions of the vehicle; an e-Corner configured to independently control driving, steering, and braking for each wheel of the vehicle; an output module configured to output the images captured by the camera module; and a processor operatively coupled to the input module, the camera module, the e-Corner module, and the output module. The processor may receive the driving mode, drive the e-Corner module by adjusting a driving direction, steering rod wheels, a variable gear ratio (VGR), and braking force, and output the images from the camera module to the output module according to a traveling direction.

FIG. 2

EP 4 703 222 A1

**(Cont. next page)**

(52) Cooperative Patent Classification (CPC): (Cont.)
B60W 2540/18; B60W 2710/08; B60W 2710/18;
B60W 2710/207; B62D 5/0418

## Description

## BACKGROUND

FIELD

The present disclosure relates to an apparatus and method for controlling an e-Corner vehicle, and more particularly, to an apparatus and method for controlling an e-Corner vehicle provided with an e-Corner module capable of omnidirectional movement, which provides driving convenience suitable for the traveling direction.

DISCUSSION OF THE BACKGROUND

Generally, vehicle steering systems are used to control the posture or direction of a vehicle as desired by a driver. Typically, hydraulic power steering apparatuses, which obtain hydraulic assistance force obtained from a pump coupled to a crankshaft of an engine to reduce operating force needed for the driver to handle a steering wheel, have been widely used.

However, such hydraulic power steering apparatuses, which obtain hydraulic assistance force from the pump coupled to the crankshaft of the engine, are dependent on revolutions per minute (RPM) of the engine, and use engine output, thus resulting in a disadvantage of reduced engine output.

When a vehicle is stationary or moving at low speed, despite a relatively large load applied to tires of the vehicle, the RPM of the engine is relatively low, resulting in reduced hydraulic assistance force from the pump. On the other hand, when the vehicle is moving at high speed, despite a relatively small load applied to the tires of the vehicle, the RPM of the engine is relatively high, resulting in increased hydraulic assistance force from the pump. The foregoing creates an issue that contradicts a status of the vehicle, where relatively large steering force is required when the vehicle is stationary or moving at low speed, and relatively small steering force is required when the vehicle is moving at high speed.

Furthermore, it is difficult to achieve desired steering as variables determining the steering change due to road conditions or other external factors.

Four-wheel steering systems capable of simultaneously operating both front and rear wheels through manipulation of a steering wheel have been developed. Such a four-wheel steering system simultaneously transmits lateral forces to the front and rear wheels, stabilizing the movement of the vehicle by steering the rear wheels in-phase with the front wheels during high-speed driving and lane changes. In addition, during low-speed driving, parking, or U-turns, the four-wheel steering system independently controls the four wheels to steer the rear wheels in reverse phase relative to the front wheels, thereby reducing the turning radius of the vehicle, and enhancing convenience and efficiency in narrow spaces, such as narrow roads or winding roads.

The above information disclosed in this section of BACKGROUND ART is only for enhancement of understanding of the background of the present disclosure, and therefore it may contain information that does not form the related art.

## SUMMARY

In this way, a four-wheel steering apparatus is designed so that inscribed circles of steering angles of the respective wheels form concentric circles during vehicle turning, ensuring that a turning radius of each wheel remains consistent.

Furthermore, in a four-wheel independent steering apparatus, movement of the vehicle is determined by following commanded steering angles received from a higher-level controller during crab driving, zero-radius turning, or straight traveling.

Recently, e-Corner modules capable of independently operating and controlling the driving, braking, and steering of all four wheels including front and rear wheels have been developed, thus enabling implementation of various driving modes based on intention of the driver.

As such, vehicles equipped with the e-Corner modules may perform various driving motions, including in-phase and counter-phase control of the front and rear wheels, crab mode, diagonal mode, zero-turn mode, and the like.

In the case of the crab mode, the traveling direction changes to the left or right relative to a driver's seat, requiring the driver to turn his/her head to check the traveling direction, thereby causing inconvenience for the driver and increasing fatigue and the risk of safety accidents.

Furthermore, when providing special-purposed modes such as the crab mode, it is necessary not only to change the traveling direction but also to consider the driving difficulty and safety for each traveling direction and provide driving convenience tailored to each traveling direction.

To overcome the aforementioned problems, various embodiments of the present disclosure are directed to providing an apparatus and method for controlling an e-Corner vehicle equipped with an e-Corner module capable of omnidirectional movement, which adjust the driving force direction, steering rod wheels, variable gear ratio (VGR), braking force, and the orientation of camera images according to a driving mode, thereby providing a driving environment suitable for each traveling direction.

However, the technical problem to be solved by the present disclosure is not limited to the above, and other objects not mentioned herein will be understood from the following description by those skilled in the art.

An apparatus for controlling an e-Corner vehicle according to an embodiment of the present disclosure may include: an input module configured to receive a driving mode; a camera module configured to capture images in front, rear, left, and right directions of the vehicle; an e-Corner configured to independently control driving, steering, and braking for each wheel of the vehicle; an output module configured to output the images captured by the camera module; and a processor operatively coupled to the input module, the camera module, the e-Corner module, and the output module. The processor may receive the driving mode, drive the e-Corner module by adjusting a driving direction, steering rod wheels, a variable gear ratio (VGR), and braking force, and output the images from the camera module to the output module according to a traveling direction.

In an embodiment, the driving mode may include any one of a forward mode, a reverse mode, a left crab mode, and a right crab mode.

In an embodiment, the processor may adjust the VGR of the steering rod wheels according to the traveling direction so that a turning radius of the vehicle matches with a turning radius of the vehicle in forward movement.

In an embodiment, the processor may set wheels positioned at the front in the traveling direction as the steering rod wheels.

In an embodiment, the processor may apply a weight to the braking force of wheels positioned at the rear in the traveling direction.

In an embodiment, the processor may output the images to the output module as front, rear, left, and right screens divided from each other, such that the traveling direction aligns with a capturing direction of the camera module.

In an embodiment, the camera module may include a front camera, a rear camera, a left-side camera, and a right-side camera.

A method of controlling an e-Corner vehicle according to an embodiment of the present disclosure may include: receiving a driving mode by a processor; driving an e-Corner module by the processor by adjusting a driving direction, steering rod wheels, a variable gear ratio (VGR), and braking force based on the input driving mode; and outputting images captured by a camera module to an output module by the processor according to a traveling direction.

In an embodiment, the driving mode may include any one of a forward mode, a reverse mode, a left crab mode, and a right crab mode.

In an embodiment, the driving of the e-Corner module may include adjusting the VGR of the steering rod wheels by the processor according to the traveling direction so that a turning radius of the vehicle matches with a turning radius in forward movement.

In an embodiment, the driving of the e-Corner module may include setting wheels positioned at the front in the traveling direction as the steering rod wheels by the processor.

In an embodiment, the driving of the e-Corner module may include applying a weight to the braking force of wheels positioned at the rear in the traveling direction by the processor.

In an embodiment, the outputting of the image may include outputting, by the processor, the images to the output module as front, rear, left, and right screens divided from each other, such that the traveling direction aligns with a capturing direction of the camera module.

In an embodiment, the outputting of the image may include outputting, by the processor, the images captured by a front camera, a rear camera, a left-side camera, and a right-side camera of the camera module to the front screen, the rear screen, the left-side screen, and the right-side screen, respectively.

**BRIEF DESCRIPTION OF THE DRAWINGS**

FIG. 1 is a block diagram illustrating a configuration of an apparatus for controlling an e-Corner vehicle according to an embodiment of the present disclosure.

FIG. 2 is a conceptual diagram illustrating the orientation of wheels by an e-Corner module in the apparatus for controlling an e-Corner vehicle according to an embodiment of the present disclosure.

FIGS. 3 and 4 are diagrams illustrating traveling directions according to driving modes in the apparatus for controlling an e-Corner vehicle according to an embodiment of the present disclosure.

FIG. 5 is a table illustrating operating statuses of the e-Corner module according to driving modes in an apparatus for controlling the e-Corner vehicle according to an embodiment of the present disclosure.

FIG. 6 is a conceptual diagram for describing a turning radius in the apparatus for controlling an e-Corner vehicle according to an embodiment of the present disclosure.

FIG. 7 is a flowchart for describing a method of controlling an e-Corner vehicle according to an embodiment of the present disclosure.

## DETAILED DESCRIPTION OF THE ILLUSTRATED EMBODIMENTS

Hereinafter, an apparatus and method for controlling an e-Corner vehicle according to the present disclosure will be described with reference to the accompanying drawings. It should be noted that the drawings are not to precise scale and may be exaggerated in thickness of lines or sizes of components for descriptive convenience and clarity only. Furthermore, the terms as used herein are defined by taking functions of the disclosure into account and can be changed according to the custom or intention of users or operators. Therefore, definition of the terms should be made according to the overall disclosures set forth herein.

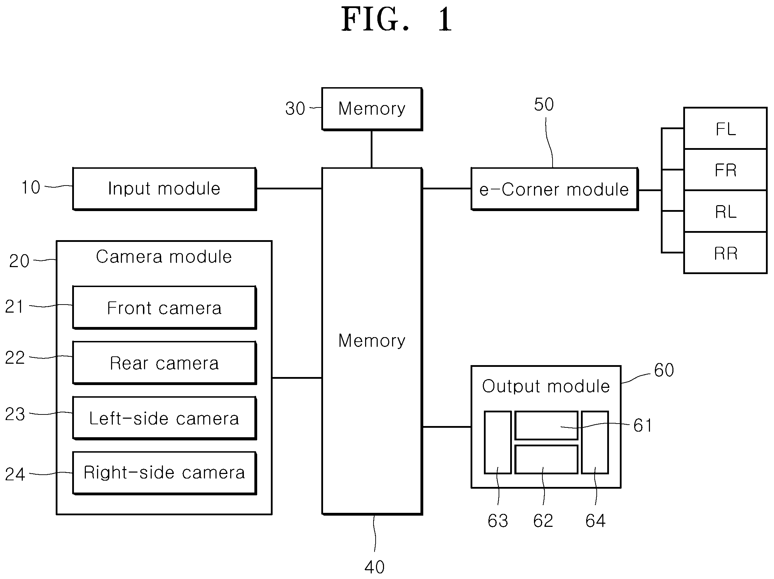

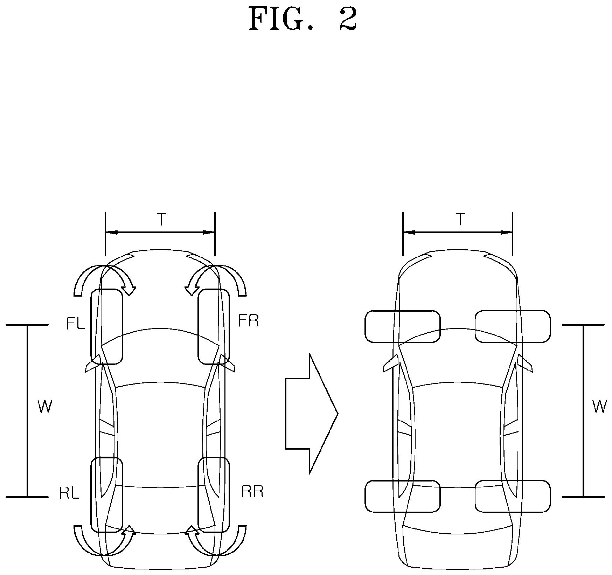

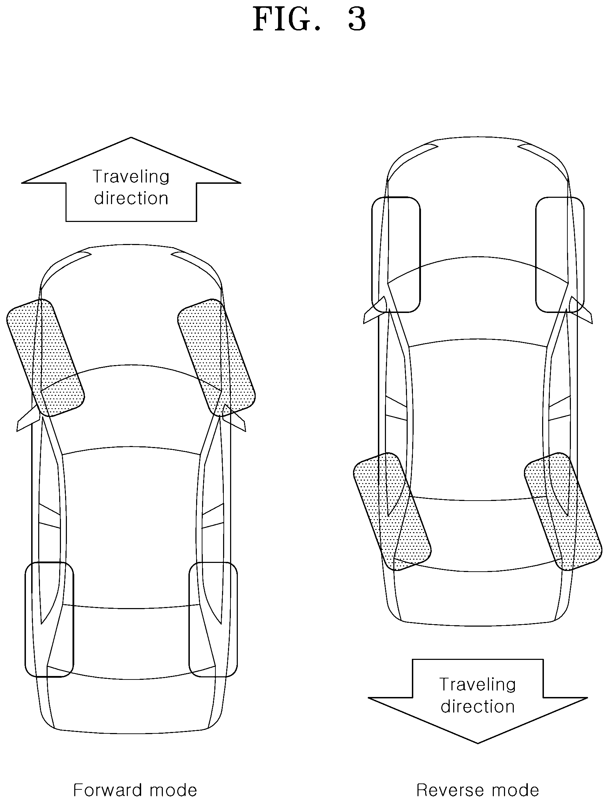

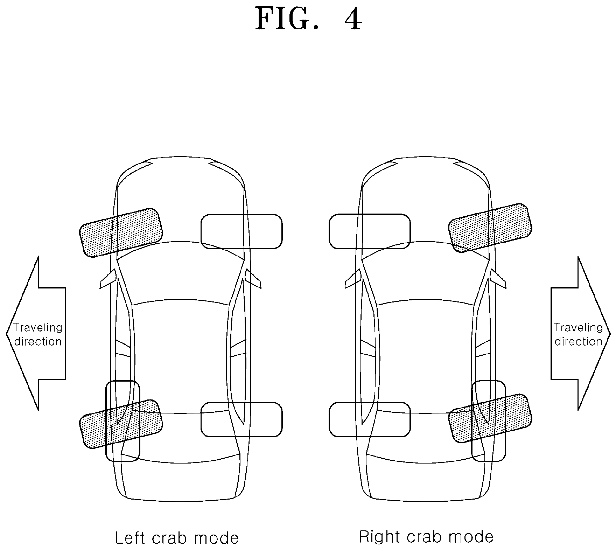

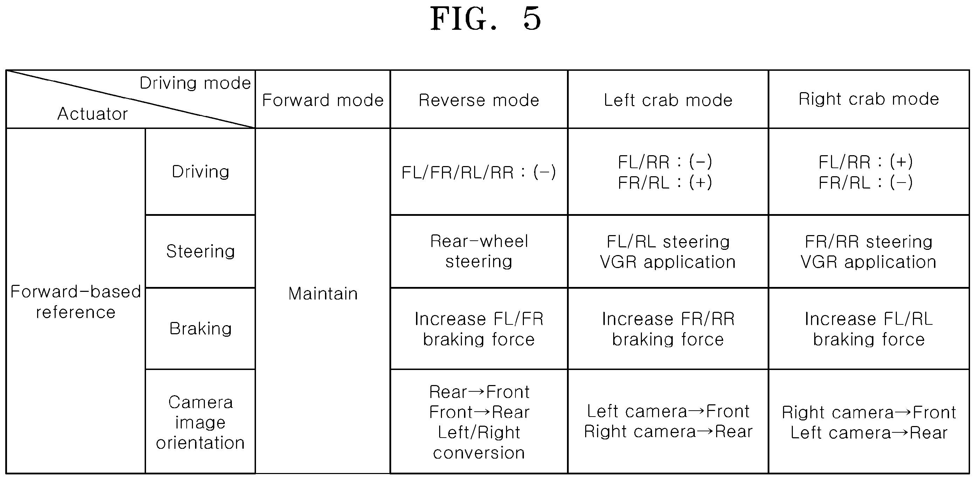

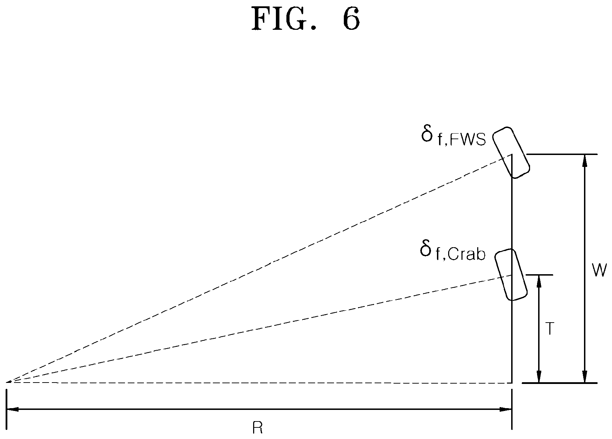

FIG. 1 is a block diagram illustrating a configuration of an apparatus for controlling an e-Corner vehicle according to an embodiment of the present disclosure. FIG. 2 is a conceptual diagram illustrating the orientation of wheels by an e-Corner module in the apparatus for controlling an e-Corner vehicle according to an embodiment of the present disclosure. FIGS. 3 and 4 are diagrams illustrating traveling directions according to driving modes in the apparatus for controlling an e-Corner vehicle according to an embodiment of the present disclosure. FIG. 5 is a table illustrating operating statuses of the e-Corner module according to driving modes in the apparatus for controlling an e-Corner vehicle according to an embodiment of the present disclosure. FIG. 6 is a conceptual diagram for describing a turning radius in the apparatus for controlling an e-Corner vehicle according to an embodiment of the present disclosure.

As illustrated in FIG. 1, an apparatus for controlling an e-Corner vehicle according to an embodiment of the present disclosure may include an input module 10, a camera module 20, a memory 30, a processor 40, an e-Corner module 50, and an output module 60.

The input module 10 may receive a driving mode selected by the driver.

For example, the driving mode may include any one of a forward mode, a reverse mode, a left crab mode, and a right crab mode.

In the present embodiment, the input module 10 is configured to receive a driving mode input and change settings of the e-Corner module 50 to provide a driving environment according to the input driving mode. Therefore, while the present embodiment focuses on the driving mode, the input module 10 may also receive inputs such as a position value of an accelerator pedal, a position value of a brake pedal, and a steering angle to drive the e-Corner vehicle.

The camera module 20 may capture images in front, rear, left, and right directions of the vehicle, respectively.

In other words, the camera module 20 may include a front camera 21 that captures an image in front of the vehicle, a rear camera 22 that captures an image behind the vehicle, a left-side camera 23 that captures an image on a left side of the vehicle, and a right-side camera 24 that captures an image on a right side of the vehicle.

For example, the left-side camera 23 and the right-side camera 24 may substitute for side mirrors or, together with the rear camera 22, may provide images of rear-side areas to offer rear-side views similar to that of side mirrors.

The e-Corner module 50 may independently control driving, steering, and braking for each wheel of the vehicle.

Here, the e-Corner module 50 may receive inputs such as a position value of the accelerator pedal, a position value of the brake pedal, and a steering angle according to the driving mode, and may generate driving force or braking force for each of the wheels FL, FR, RL, and RR and steer steering rod wheels based on the steering angle.

In other words, as illustrated in FIG. 2, the e-Corner module 50 may steer the steering rod wheels by rotating each of the wheels FL, FR, RL, and RR up to 90 degrees depending on the driving mode and may generate driving force or braking force for each of the wheels FL, FR, RL, and RR.

The output module 60 may output images captured by the camera module 20 to a front screen 61, a rear screen 62, a left-side screen 63, and a right-side screen 64, respectively.

In this case, the output module 60 may output the front screen 61, the rear screen 62, the left-side screen 63, and the right-side screen 64 through multiple displays, respectively, or may divide a single display into multiple screens and output the front screen 61, the rear screen 62, the left-side screen 63, and the right-side screen 64 by the respective screens.

Here, the front screen 61, the rear screen 62, the left-side screen 63, and the right-side screen 64 of the output module 60 may be set based on the traveling direction.

Accordingly, depending on the driving mode, the image captured by the front camera 21 may be output to the front screen 61 in the forward mode, to the rear screen 62 in the reverse mode, to the right-side screen 64 in the left crab mode, and to the left-side screen 63 in the right crab mode.

Furthermore, depending on the driving mode, the image captured by the rear camera 22 may be output to the rear screen 62 in the forward mode, to the front screen 61 in the reverse mode, to the left-side screen 63 in the left crab mode, and to the right-side screen 64 in the right crab mode.

In addition, depending on the driving mode, the image captured by the left-side camera 23 may be output to the left-side screen 63 in the forward mode, to the right-side screen 64 in the reverse mode, to the front screen 61 in the left crab mode, and to the rear screen 62 in the right crab mode.

Furthermore, depending on the driving mode, the image captured by the right-side camera 24 may be output to the right-side screen 64 in the forward mode, to the left-side screen 63 in the reverse mode, to the rear screen 62 in the left crab mode, and to the front screen 61 in the right crab mode.

The memory 30 may store execution programs related to the operation of the apparatus for controlling an e-Corner vehicle, and the stored information may be selectively accessed by the processor 40 as needed.

In other words, the memory 30 stores various types of data and commands generated during the execution of an operating system (O/S) or applications (programs or applets) for driving the apparatus for controlling an e-Corner vehicle. For example, the memory 30 may be implemented with a non-volatile memory, a volatile memory, a flash memory, a hard disk drive (HDD), or a solid-state drive (SSD). Furthermore, the memory 30 may be accessed, allowing data to be read, written, modified, deleted, or updated by the processor 40.

The processor 40 is operatively coupled to the input module 10, the camera module 20, the memory 30, the e-Corner module 50, and the output module 60, and may copy various programs stored in the memory 30 to random assess memory (RAM), execute the programs, and perform various operations to control the overall operation of the apparatus for controlling an e-Corner vehicle.

Here, while the processor 40 has been described as including only a single central processing unit (CPU), the processor 40 may be implemented with multiple CPUs (or digital signal processors (DSPs), systems on chips (SoCs), etc.) in actual implementation.

In various embodiments, the processor 40 may be implemented with a digital signal processor (DSP) for processing digital signals, a microprocessor, or a time controller (TCON). However, the processor 40 is not limited to the aforementioned examples and may include one or more of a central processing unit (CPU), a microcontroller unit (MCU), a micro processing unit (MPU), a controller, an application processor (AP), or a communication processor (CP), and an advanced RISC machine (ARM) processor, or may be defined as a corresponding term. Furthermore, the processor 40 may be implemented with a system on chip (SoC) or large scale integration (LSI) with embedded processing algorithms, or with a field programmable gate array (FPGA).

In other words, the processor 40 may execute an execution program stored in the memory 30, receive a driving mode from the input module 10, drive the e-Corner module 50 by adjusting the driving direction, steering rod wheels, variable gear ratio (VGR), and braking force, and output images from the camera module 20 to the output module 60 according to the traveling direction.

The driving mode may include any one of the forward mode, the reverse mode, the left crab mode, and the right crab mode, as illustrated in FIGS. 3 and 4.

Here, the steering rod wheels steered based on the steering angle may be set as the wheels positioned at the front in the traveling direction.

As illustrated in FIG. 5, the processor 40 may convert the driving direction depending on the driving mode.

Based on the forward mode, in the reverse mode, the direction of each of the wheels FL, FR, RL, and RR may be converted to an opposite direction (-).

Furthermore, with regard to the left crab mode and right crab mode, in which the directions of the wheels are rotated by 90 degrees as shown in FIG. 2, the front-left wheel FL and the rear-right wheel RR may be converted to the opposite direction (-) in the left crab mode, while the front-right wheel FR and the rear-left wheel RL are maintained in the same direction (+).

In the right crab mode, the front-left wheel FL and the rear-right wheel RR may be maintained in the same direction (+), while the front-right wheel FR and the rear-left wheel RL may be converted to the opposite direction (-).

As illustrated in FIGS. 3 and 4, the processor 40 may set the steering rod wheels for steering as follows: in the reverse mode, the rear-left wheel RL and the rear-right wheel RR may be set as the steering rod wheels; in the left crab mode, the front-left wheel FL and the rear-left wheel RL may be set as the steering rod wheels; and in the right crab mode, the front-right wheel FR and the rear-right wheel RR may be set as the steering rod wheels.

The processor 40 may adjust the VGR in the case where the driving mode is the left crab mode or the right crab mode.

The VGR represents a ratio of a change in the angle of the steering rod wheels to a change in rotation of the steering wheel. For example, in the forward mode, if the VGR is 12:1, the steering rod wheels rotate 30 degrees when the steering wheel is rotated 360 degrees.

However, as illustrated in FIG. 2, a track width T and a wheelbase W of the vehicle are different from each other.

Therefore, depending on the traveling direction, the processor 40 may adjust the VGR of the steering rod wheels to match a turning radius R with that in forward movement.

If the same VGR is applied despite a change in the steering mode, steering the steering rod wheels may result in a difference in the turning radius R due to the difference in the track width T and the wheelbase W, as illustrated in FIG. 6.

Accordingly, to provide consistent steering stability even when the steering mode changes, the processor 40 may adjust the VGR to maintain the same turning radius R in the forward and reverse modes and even in the left and right crab modes.

As illustrated in FIG. 6, a front wheel steering angle $\delta_{f,FWS}$ in the forward mode may be converted into a front wheel steering angle $\delta_{f,Crab}$ in the crab mode by applying the ratio of the track width T to the wheelbase W to ensure the same turning radius R based on a bicycle model.

For example, the front wheel steering angle $\delta_{f,FWS}$ in the forward mode can be calculated by multiplying a steering wheel angle $\delta_{handwheel}$ by a total gear ratio $C_{TGR}$, as shown in Equation 1.

[Equation 1]

Here, the turning radius R in the forward mode may be determined by the

$$\delta_{f,FWS} = C_{TGR} \cdot \delta_{handwheel}$$
$$C_{TGR} = 1/12$$

wheelbase W, while the turning radius R in the crab mode may be determined by the track width T.

Therefore, in the case where it is assumed that the front wheel steering angle $\delta_{f,FWS}$ in the forward mode and the front wheel steering angle $\delta_{f,Crab}$ in the crab mode have the same turning radius R, the front wheel steering angle $\delta_{f,FWS}$ in the forward mode may be converted into the front wheel steering angle $\delta_{f,Crab}$ in the crab mode through Equation 2.

In other words, VGR may be adjusted based on the ratio of the track width T to the wheelbase W.

[Equation 2]

$$\tan \delta_{f,FWS} = \frac{W}{R} \qquad \tan \delta_{f,Crab} = \frac{T}{R}$$

$$\tan \delta_{f,Crab} = \frac{T \cdot \tan \delta_{f,FWS}}{W}$$

$$\therefore \delta_{f,Crab} = \tan^{-1} \frac{T \cdot \tan \delta_{f,FWS}}{W}$$

In addition, the processor 40 may apply a weight to the braking force for the wheels positioned at the rear in the traveling direction to ensure driving safety according to the driving mode.

Therefore, as illustrated in FIG. 5, the processor 40 may apply the weight to the front-left wheel FL and the front-right wheel FR in the reverse mode to increase the braking force.

In the left crab mode, the weight may be applied to the front-right wheel FR and the rear-right wheel RR to increase the braking force. In the right crab mode, the weight may be applied to the front-left wheel FL and the rear-left wheel RL to increase the braking force.

The processor 40 may output captured images received from the camera module 20 to the respective screens 61, 62, 63, and 64 of the output module 60 according to the driving mode, thereby allowing a driver to check the front, rear, left, and right views of the vehicle while seated in a driver's seat.

The processor 40 may output the captured images to the front screen 61, the rear screen 62, the left-side screen 63, and the right-side screen 64 of the output module 60, respectively, such that the traveling direction matches a capturing direction of the camera module 20.

In other words, in the forward mode, the processor 40 may output the captured image of the front camera 21 to the front screen 61, the captured image of the rear camera 22 to the rear screen 62, the captured image of the left-side camera 23 to the left-side screen 63, and the captured image of the right-side camera 24 to the right-side screen 64.

In the reverse mode, the processor 40 may output the captured image of the front camera 21 to the rear screen 62, the captured image of the rear camera 22 to the front screen 61, the captured image of the left-side camera 23 to the right-side screen 64, and the captured image of the right-side camera 24 to the left-side screen 63.

In the left crab mode, the processor 40 may output the captured image of the front camera 21 to the right-side screen 64, the captured image of the rear camera 22 to the left-side screen 63, the captured image of the left-side camera 23 to the front screen 61, and the captured image of the right-side camera 24 to the rear screen 62.

In the right crab mode, the processor 40 may output the captured image of the front camera 21 to the left-side screen 63, the captured image of the rear camera 22 to the right-side screen 64, the captured image of the left-side camera 23 to the rear screen 62, and the captured image of the right-side camera 24 to the front screen 61.

As described above, according to the apparatus for controlling an e-Corner vehicle according to the present disclosure, in a vehicle equipped with the e-Corner module capable of omnidirectional movement, even when the traveling direction is changed due to selection of the forward/reverse driving or crab modes, the driving environment corresponding to the changed traveling direction can be provided by adjusting the driving force direction, the steering rod wheels, the VGR, the braking force, and the camera image orientation depending on the driving mode. As a result, driving convenience can be improved, the risk of accidents can be reduced, and various functional purposes can be achieved through omnidirectional driving operations.

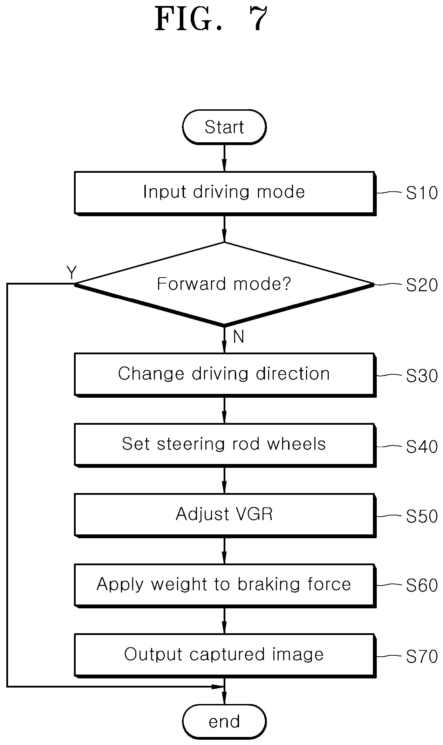

FIG. 7 is a flowchart for describing a method of controlling the e-Corner vehicle according to an embodiment of the present disclosure.

As illustrated in FIG. 7, in the method of controlling the e-Corner vehicle according to an embodiment of the present invention, the processor 40 executes an execution program embedded in the memory 30 and then receives a driving mode from the input module 10 (in step S10).

For example, the driving mode may include any one of the forward mode, the reverse mode, the left crab mode, and the right crab mode.

Here, the traveling direction according to the driving mode may include forward, reverse, left, and right, as illustrated in FIGS. 3 and 4.

After receiving the driving mode in step S10, the processor 40 determines whether the input driving mode is the forward mode, (in step S20).

In step S20, if it is determined that the driving mode is the forward mode, the processor 40 terminates the process as the reference driving mode without making any changes to the e-Corner module 50.

However, in the case where the driving mode is not the forward mode, that is, if the driving mode is one of the reverse mode, the left crab mode, and the right crab mode, the processor 40 changes the driving direction based on the driving mode (in step S30).

In other words, as illustrated in FIG. 5, the processor 40 may convert the driving direction depending on the driving mode.

Based on the forward mode, the reverse mode may convert the direction of each of the wheels FL, FR, RL, and RR to an opposite direction (-).

Furthermore, with regard to the left crab mode and right crab mode, in which the orientations of the wheels are rotated by 90 degrees as shown in FIG. 2, in the left crab mode, the front-left wheel FL and the rear-right wheel RR may be converted to the opposite direction (-) while the front-right wheel FR and the rear-left wheel RL are maintained in the same direction (+).

In the right crab mode, the front-left wheel FL and the rear-right wheel RR may be maintained in the same direction (+), while the front-right wheel FR and the rear-left wheel RL may be converted to the opposite direction (-).

After changing the driving direction of each of the wheels FL, FR, RL, and RR according to the steering mode in step S30, the processor 40 sets the wheels positioned at the front in the traveling direction as the steering rod wheels based on the driving mode (in step S40).

The steering rod wheels are wheels that are steered according to the movement of the steering wheel. As illustrated in FIGS. 3 and 4, the processor 40 may set the rear-left wheel RL and the rear-right wheel RR as the steering rod wheels in the reverse mode, set the front-left wheel FL and the rear-left wheel RL as the steering rod wheels in the left crab mode, and set the front-right wheel FR and the rear-right wheel RR as the steering rod wheels in the right crab mode.

After setting the steering rod wheels in step S40, the processor 40 adjusts the VGR of the steering rod wheels to match the turning radius with that in forward movement, according to the traveling direction based on the steering mode (in step S50).

Here, the processor 40 may adjust the VGR in the case where the steering mode is the left crab mode or the right crab mode.

The VGR represents a ratio of a change in the angle of the steering rod wheels to a change in rotation of the steering wheel. For example, in the forward mode, if the variable gear ratio is 12:1, the steering rod wheels rotate 30 degrees when the steering wheel is rotated 360 degrees.

However, as illustrated in FIG. 2, the track width T and the wheelbase W of the vehicle are different from each other.

Therefore, depending on the traveling direction, the processor 40 may adjust the VGR of the steering rod wheels to match the turning radius R with that in the forward movement.

If the same VGR is applied despite a change in the steering mode, steering the steering rod wheels may result in a difference in the turning radius R due to the difference in the track width T and the wheelbase W, as illustrated in FIG. 6. Accordingly, to provide consistent steering stability even when the steering mode changes, the processor 40 may adjust the VGR to maintain the same turning radius R in the forward and reverse modes and even in the left and right crab modes.

As illustrated in FIG. 6, the front wheel steering angle $\delta_{f,FWS}$ in the forward mode may be converted into the front wheel steering angle $\delta_{f,Crab}$ in the crab mode by applying the ratio of the track width T to the wheelbase W to ensure the same turning radius R based on the bicycle model.

For example, the front wheel steering angle $\delta_{f,FWS}$ in the forward mode can be calculated by multiplying the steering wheel angle $\delta_{handwheel}$ by the total gear ratio $C_{TGR}$, as shown in Equation 1.

Here, the turning radius R in the forward mode may be determined by the wheelbase W, while the turning radius R in the crab mode may be determined by the track width T.

Therefore, in the case where it is assumed that the front wheel steering angle $\delta_{f,FWS}$ in the forward mode and the front wheel steering angle $\delta_{f,Crab}$ in the crab mode have the same turning radius R, the front wheel steering angle $\delta_{f,FWS}$ in the forward mode may be converted into the front wheel steering angle $\delta_{f,Crab}$ in the crab mode through Equation 2.

In other words, VGR may be adjusted based on the ratio of the track width T to the wheelbase W.

After adjusting the VGR in step S50, the processor increases the braking force by applying a weight to the braking force of the wheels positioned at the rear in the traveling direction based on the steering mode (in step S60).

As illustrated in FIG. 5, the processor 40 may apply the weight to the front-left wheel FL and the front-right wheel FR in the reverse mode to increase the braking force.

In the left crab mode, the weight may be applied to the front-right wheel FR and the rear-right wheel RR to increase the braking force. In the right crab mode, the weight may be applied to the front-left wheel FL and the rear-left wheel RL to increase the braking force.

After applying weighting to the braking force in step S60, the processor 40 outputs the captured images from the camera module 20 through the output module 60 according to the traveling direction based on the driving mode (in step S70).

Here, the processor 40 may output the captured images to the front screen 61, the rear screen 62, the left-side screen 63, and the right-side screen 64 of the output module 60, respectively, such that the traveling direction matches a capturing direction of the camera module 20.

In other words, in the forward mode, the processor 40 may output the captured image of the front camera 21 to the front screen 61, the captured image of the rear camera 22 to the rear screen 62, the captured image of the left-side camera 23 to the left-side screen 63, and the captured image of the right-side camera 24 to the right-side screen 64.

In the reverse mode, the processor 40 may output the captured image of the front camera 21 to the rear screen 62, the captured image of the rear camera 22 to the front screen 61, the captured image of the left-side camera 23 to the right-side screen 64, and the captured image of the right-side camera 24 to the left-side screen 63.

In the left crab mode, the processor 40 may output the captured image of the front camera 21 to the right-side screen 64, the captured image of the rear camera 22 to the left-side screen 63, the captured image of the left-side camera 23 to the front screen 61, and the captured image of the right-side camera 24 to the rear screen 62.

In the right crab mode, the processor 40 may output the captured image of the front camera 21 to the left-side screen 63, the captured image of the rear camera 22 to the right-side screen 64, the captured image of the left-side camera 23 to the rear screen 62, and the captured image of the right-side camera 24 to the front screen 61.

As described above, according to the method of controlling the e-Corner vehicle according to the present disclosure, in a vehicle equipped with the e-Corner module capable of omnidirectional movement, even when the traveling direction is changed due to selection of the forward/reverse driving or crab modes, the driving environment corresponding to the changed traveling direction can be provided by adjusting the driving force direction, the steering rod wheels, the VGR, the braking force, and the camera image orientation depending on the driving mode. As a result, driving convenience can be improved, the risk of accidents can be reduced, and various functional purposes can be achieved through omnidirectional driving operations.

The term "module" used herein may refer to a unit implemented with hardware, software, and firmware and may, for example, be interchangeable with a term, such as "logic," "logical block," "component," "circuit," or the like. The module may be a unitary part or a minimum unit or a part of the unitary part for performing one or more functions. For example, the module may be implemented as an application-specific integrated circuit (ASIC).

The implementations described herein may be embodied as, for example, a method, a process, a device, a software program, a data stream, or signals. Even in the case in which the present disclosure has been discussed in the context of a single form of implementation (e.g., only discussed as a method), the discussed features may also be realized in another form (e.g., a device or a program). The device may be realized in a suitable form, such as hardware, software, or firmware. The method may be realized in a device, such as a processor, typically referred to as a processing device including, for example, a computer, a microprocessor, an integrated circuit, a programmable logic device, or the like. The processor may also include a computer, a cellular phone, a personal digital assistant (PDA), and other communication devices facilitating information communication between final users.

In accordance with an apparatus and method for controlling an e-Corner vehicle according to an embodiment of the present disclosure, in a vehicle equipped with an e-Corner module capable of omnidirectional movement, even when a traveling direction is changed due to selection of forward/reverse driving or crab modes, a driving environment suitable for the changed traveling direction can be provided by adjusting a driving force direction, steering rod wheels, a variable gear ratio, braking force, and camera image orientation depending on the driving mode. As a result, driving convenience can be improved, the risk of accidents can be reduced, and various functional purposes can be achieved through omnidirectional driving operations.

The effects of the present disclosure are not limited to the above-described effects, and other effects not mentioned will be clearly understood by those skilled in the art from the following description.

While the present disclosure has been described with reference to the specific embodiments illustrated in the attached drawings, this is only for illustrative purposes, and it will be apparent to those skilled in the art that various modifications and other equivalent embodiments may be made without departing from the spirit and scope of the present disclosure as defined in the following claims.

Therefore, the spirit and scope of the present disclosure must be defined by the accompanying claims.

## Claims

1. An apparatus for controlling an e-Corner vehicle, the apparatus comprising:

   an input module configured to receive a driving mode;
   a camera module configured to capture images in front, rear, left, and right directions of the vehicle;
   an e-Corner module configured to independently control driving, steering, and braking for each wheel of the vehicle;
   an output module configured to output the images captured by the camera module; and
   a processor operatively coupled to the input module, the camera module, the e-Corner module, and the output module,
   wherein the processor receives the driving mode, drives the e-Corner module by adjusting a driving direction, steering rod wheels, a variable gear ratio (VGR), and braking force, and outputs the images from the camera module to the output module according to a traveling direction.

2. The apparatus of claim 1, wherein the driving mode comprises any one of a forward mode, a reverse mode, a left crab mode, and a right crab mode.

3. The apparatus of claim 1 or 2, wherein the processor adjusts the VGR of the steering rod wheels according to the traveling direction so that a turning radius of the vehicle matches with a turning radius of the vehicle in forward movement.

4. The apparatus of any one of claims 1 to 3, wherein the processor sets wheels positioned at the front in the traveling direction as the steering rod wheels.

5. The apparatus of any one of claims 1 to 4, wherein the processor applies a weight to the braking force of wheels positioned at the rear in the traveling direction.

6. A method of controlling an e-Corner vehicle, the method comprising:

   receiving a driving mode by a processor;
   driving an e-Corner module by the processor by adjusting a driving direction, steering rod wheels, a variable gear ratio (VGR), and braking force based on the input driving mode; and
   outputting images captured by a camera module to an output module by the processor according to a traveling direction.

7. The method of claim 6, wherein the driving mode comprises any one of a forward mode, a reverse mode, a left crab mode, and a right crab mode.

8. The method of claim 6 or 7, wherein the driving of the e-Corner module comprises adjusting the VGR of the steering rod wheels by the processor according to the traveling direction so that a turning radius of the vehicle matches with a turning radius in forward movement.

9. The method of any one of claims 6 to 8, wherein the driving of the e-Corner module comprises setting wheels positioned at the front in the traveling direction as the steering rod wheels by the processor.

10. The method of any one of claims 6 to 9, wherein the driving of the e-Corner module comprises applying a weight to the braking force of wheels positioned at the rear in the traveling direction by the processor.

# FIG. 1

10 — Input module

30 — Memory

50 — e-Corner module

FL
FR
RL
RR

20 — Camera module
21 — Front camera
22 — Rear camera
23 — Left-side camera
24 — Right-side camera

Memory

40

Output module — 60
61
Output module 63 62 64

EP 4 703 222 A1

# FIG. 2

# FIG. 3

Traveling direction

Forward mode

Traveling direction

Reverse mode

# FIG. 4

Left crab mode      Right crab mode

# FIG. 5

| Driving mode / Actuator | | Forward mode | Reverse mode | Left crab mode | Right crab mode |
|---|---|---|---|---|---|
| Forward-based reference | Driving | Maintain | FL/FR/RL/RR : (−) | FL/RR : (−)<br>FR/RL : (+) | FL/RR : (+)<br>FR/RL : (−) |
| | Steering | | Rear-wheel steering | FL/RL steering VGR application | FR/RR steering VGR application |
| | Braking | | Increase FL/FR braking force | Increase FR/RR braking force | Increase FL/RL braking force |
| | Camera image orientation | | Rear→Front<br>Front→Rear<br>Left/Right conversion | Left camera→Front<br>Right camera→Rear | Right camera→Front<br>Left camera→Rear |

EP 4 703 222 A1

# FIG. 6

# FIG. 7

```
        ┌─────────┐
        │  Start  │
        └─────────┘
             │
             ▼
   ┌──────────────────────┐
   │   Input driving mode │─── S10
   └──────────────────────┘
             │
             ▼
 Y      ╱──────────────╲
 ◄─────╱  Forward mode? ╲─── S20
       ╲                ╱
        ╲──────────────╱
             │ N
             ▼
   ┌──────────────────────┐
   │ Change driving direction │─── S30
   └──────────────────────┘
             │
             ▼
   ┌──────────────────────┐
   │  Set steering rod wheels │─── S40
   └──────────────────────┘
             │
             ▼
   ┌──────────────────────┐
   │      Adjust VGR      │─── S50
   └──────────────────────┘
             │
             ▼
   ┌──────────────────────┐
   │ Apply weight to braking force │─── S60
   └──────────────────────┘
             │
             ▼
   ┌──────────────────────┐
   │  Output captured image │─── S70
   └──────────────────────┘
             │
             ▼
        ┌─────────┐
        │   end   │
        └─────────┘
```

# EUROPEAN SEARCH REPORT

**Application Number**

EP 25 18 4378

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2023 0118324 A (HYUNDAI MOBIS CO LTD [KR]) 11 August 2023 (2023-08-11) * paragraphs [0007], [0022], [0025], [0038], [0039], [0051]; figures 1,4,5,7 * | 1-10 | INV. B60W10/08 B60T7/00 B60W10/184 B60W10/20 B60W50/14 B62D7/14 B60R1/27 |
| X | US 2024/174237 A1 (HANCHETT MARK [US] ET AL) 30 May 2024 (2024-05-30) * paragraphs [0022], [0038] - [0041], [0048], [0050]; claim 1; figures 3A-3K * | 1-10 | |
| A | US 2021/394610 A1 (KIM EUN SIK [KR]) 23 December 2021 (2021-12-23) * paragraphs [0044], [0045]; figures 1,2 * | 1-10 | |

**TECHNICAL FIELDS SEARCHED (IPC)**

B60W
B62D
B60T
B60K
B60R

The present search report has been drawn up for all claims

| Place of search | Date of completion of the search | Examiner |
|---|---|---|
| Munich | 26 November 2025 | Rameau, Pascal |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
............................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 18 4378

This annex lists the patent family members relating to the patent documents cited in  the above-mentioned European search report.
The members are as contained in the European Patent Office EDP file on
The European Patent Office is in no way liable for these particulars which are merely given for the purpose of information.

26-11-2025

| Patent document cited in search report | Publication date | Patent family member(s) | Publication date |
|---|---|---|---|
| KR 20230118324 A | 11-08-2023 | NONE | |
| US 2024174237 A1 | 30-05-2024 | NONE | |
| US 2021394610 A1 | 23-12-2021 | CN 113799868 A | 17-12-2021 |
| | | DE 102020131008 A1 | 23-12-2021 |
| | | KR 20210155881 A | 24-12-2021 |
| | | US 2021394610 A1 | 23-12-2021 |

EPO FORM P0459

For more details about this annex : see Official Journal of the European Patent Office, No. 12/82